# EUROPÄISCHE PATENTSCHRIFT

(11) **EP 2 436 107 B1**
(45) Veröffentlichungstag und Bekanntmachung des Hinweises auf die Patenterteilung: **19.03.2014**
(21) Anmeldenummer: 10727340.1
(22) Anmeldetag: 25.05.2010
(51) Int. Cl.: H02K 49/10, H02K 5/128

(54) **MAGNETKUPPLUNG SOWIE SPALTTOPF FÜR EINE MAGNETKUPPLUNG**
MAGNETIC COUPLING AND SPLIT CASE FOR A MAGNETIC COUPLING
ACCOUPLEMENT MAGNÉTIQUE ET CLOCHE D'ÉTANCHÉITÉ POUR ACCOUPLEMENT MAGNÉTIQUE

(30) Priorität: 27.05.2009 DE 102009022916
(43) Veröffentlichungstag der Anmeldung: 04.04.2012
(73) Patentinhaber: Dst Dauermagnet-system Technik GmbH, 58809 Neuenrade (DE)
(72) Erfinder: WITTSCHIER, Heinrich, 58809 Neuenrade (DE)
(74) Vertreter: Döpp, Ludger
(86) Internationale Anmeldenummer: PCT/DE2010/000572
(87) Internationale Veröffentlichungsnummer: WO 2010/136019

(56) Entgegenhaltungen:
- EP-A1- 2 040 353
- EP-A2- 1 857 681
- WO-A1-99/10971
- WO-A1-99/49912
- CH-A- 100 293
- DE-A1- 3 413 930
- DE-A1- 4 304 760
- US-A- 3 819 293

## Beschreibung

Die Erfindung betrifft eine Magnetkupplung gemäß gattungsbildendem Teil des ersten Patentanspruchs.

Spalttöpfe, die bei Magnetkupplungen üblicherweise verwendet werden, bestehen aus Metallen unterschiedlichster Legierungszusammensetzungen, Kunststoff, Keramikmaterial, Glasfaser oder Kohlefaser.

Metallische Spalttöpfe sind mit dem Problem behaftet, dass hohe Wirbelstromverluste mit damit einhergehenden hohen Temperaturen zu erheblichen Verlustleistungen im Bereich der Magnetkupplung führen können. Dies bedingt Elektromotoren mit relativ hohen Leistungen.

Kunststoffspalttöpfe weisen den Nachteil auf, dass sie nur eine geringe Temperatur- und Druckbeständigkeit haben.

Spalttöpfe aus Keramikmaterial haben den Vorteil, dass keine Wirbelstromverluste gegeben sind und somit auch keine hohen Temperaturen eintreten können. Sie haben jedoch den großen Nachteil, dass sie unverhältnismäßig teuer in der Herstellung sind. Demzufolge ist eine Wirtschaftlichkeit, insbesondere im Bereich von Magnetkupplungen, beispielsweise für Serienpumpen, nicht gegeben, vielmehr werden derartige Keramikspalttöpfe üblicherweise nur bei Sonderanfertigungen eingesetzt, um den hohen Preis derartiger Spalttöpfe zu rechtfertigen.

Die DE 20 2004 013 080 U1 betrifft eine Magnetkupplungspumpe zum Fördern von Fluiden, mit einem Pumpengehäuse, das an einen Motor montierbar ist, einem vom Motor abtreibbaren, mit Außenmagneten versehenen drehbaren Antriebsteil, einem drehbaren Läufer, der eine Pumpemwelle, wenigstens ein drehfest auf der Pumpemwelle angeordnetes Laufrad und drehfest auf der Pumpenwelle montierte Innenmagneten aufweist, wobei zwischen den in magnetischer Wirkverbindung miteinander stehenden Außenmagneten und Innenmagneten ein Spalttopf angeordnet ist. Der Spalttopf kann aus einem nicht leitenden Keramikmaterial bestehen, so dass praktisch keine Wirbelstromverluste auftreten und das als Schmier- und Kühlmittel dienende Fluid nicht übermäßig erhitzt wird. Gemäß einer anderen Variante kann der Spalttopf aus Metall bestehen.

Die US 3,819,293 offenbart eine gattungsgemäße Magnetkupplung, respektive einen gattungsgemäßen Spalttopf, für eine Magnetkupplung.

Der DE 34 13 930 A1 ist eine Kreiselpumpe zu entnehmen, mit einem Laufrad, welches mittels eines Lagers in einem Gehäuse drehbar gelagert ist. Das Laufrad mitsamt seiner Welle besteht aus einem keramischen Werkstoff.

Die CH 100293 offenbart eine Trennungswand für elektromagnetische Antriebsvorrichtungen, bei der die Trennungswand aus einer nicht metallischen Masse besteht. Angeführt werden beispielsweise Porzellan, Glas, Steingut oder dergleichen.

Die WO 99/10971 offenbart eine Heizvorrichtung, zumindest beinhaltend ein Gehäuse, das aus elektrisch nicht leitendem und nicht magnetisierbarem Werkstoff, vorzugsweise Kunststoff, Glas oder einem keramischen Werkstoff besteht.

Die EP 1 857 681 A1 offenbart eine Antriebsanordnung für eine Vakuumpumpe, zumindest beinhaltend einen Motorstator, einen Motorläufer sowie einen zwischen Stator und Läufer angeordneten hülsenartig ausgebildeten Trennelement, welches eine Innen- und eine Außenseite aufweist. Die Trennhülse umfasst ein Glasrohr.

Die DE 43 04 760 A1 betrifft eine Antriebsanordnung für die Drehanode einer Röntgenröhre, beinhaltend einen Stator und einen Rotor, wobei die Rotorwelle die Drehanode antreibt. Der Rotor ist vom Stator durch eine unmagnetische Trennschicht vakuummäßig getrennt. Die Trennschicht besteht hierbei aus NickelChrom-Stahl, aus Keramik oder aus Glas.

Durch die EP 2 040 353 A1 ist ein Spaltrohr bekannt geworden, das zumindest zum Teil aus einem keramischen oder glasartigen Material besteht. Das Material kann monolitisch sein und bedarfsweise eine Faserverstärkung aufweisen.

In der WO 99/49912 wird die Abdichtung für eine Motor-Stator-Einrichtung, insbesondere einer Blutpumpe beschrieben, wobei die Dichtung aus Glas oder Keramik besteht.

Ziel des Erfindungsgegenstandes ist es, eine gattungsgemäße Magnetkupplung dahingehend weiterzubilden, dass einerseits die Vorteile von aus Keramikmaterial bestehenden Spalttöpfen erhalten bleiben, andererseits jedoch eine gegenüber keramischem Material verbesserte Wirtschaftlichkeit gegeben ist.

Darüber hinaus soll ein Spalttopf für eine Magnetkupplung, bestehend aus einem elektrisch nicht leitenden Material, bereitgestellt werden, der einfach im Aufbau ist und gegenüber Spalttöpfen aus keramischem Material wesentlich preiswerter hergestellt werden kann.

Dieses Ziel wird bei einer gattungsgemäßen Magnetkupplung dadurch erreicht, dass der Spalttopf aus einem Borosilikatglas besteht, das neben Siliziumdioxid als Hauptbestandteil Alkalimetalloxide in Gehalten 3 - 9 %, Aluminiumoxid in Gehalten 1,5 - 8 %, Erdalkalimetalloxide in Gehalten bis 6 % und Bortrioxid in Gehalten 6-14 % enthält.

Vorteilhafte Weiterbildungen der erfindungsgemäßen Magnetkupplung sind den zugehörigen Unteransprüchen zu entnehmen.

Dieses Ziel wird bei einem aus Glas bestehenden Spalttopf für eine Magnetkupplung dadurch erreicht, dass das Glas durch ein Borosilikatglas gebildet ist, dass neben Siliziumdioxid als Hauptbestandteil Alkalimetalloxide in Gehalten 3 - 9 %, Aluminiumoxid in Gehalten 1,5 - 8 %, Erdalkalimetalloxide in Gehalten bis 6 % und Bortrioxid in Gehalten 6 bis 14 % enthält.

Vorteilhafte Weiterbildungen des erfindungsgemäßen Spalttopfes sind den zugehörigen gegenständlichen Unteransprüchen zu entnehmen.

Je nach Anwendungsfall kann es sinnvoll sein, dass der Spalttopf aus einem chemikalien-, druck- und temperaturbeständigen Glas besteht.

Einem weiteren Gedanken der Erfindung gemäß ist der Grundkörper für den Spalttopf durch ein Glasrohr gebildet, das zur Erzeugung des Spalttopfes durch Temperatur- und Druckeinfluss dergestalt umgeformt wird, dass im Bereich des einen Rohrendes ein geschlossener Boden und im Bereich des anderen Rohrendes ein Ansatz entsteht.

Alternativ besteht auch die Möglichkeit, den Spalttopf unter Druck- und Temperatureinwirkung durch Pressen eines Glasrohlings zu erzeugen.

Hinsichtlich der Materialauswahl besteht jedoch auch die Möglichkeit, derartige mit aus Glas bestehenden Spalttöpfen ausgerüstete Magnetkupplungen bei Verdichtern und Lüftern, d. h. bei trocken laufenden Magnetkupplungen einzusetzen.

Mit dem Erfindungsgegenstand wird somit eine Magnetkupplung, respektive ein Spalttopf für eine Magnetkupplung, bereit gestellt, die/der in ähnlicher Form, wie bei einem aus Keramikmaterial bestehenden Spalttopf, hinsichtlich Wirbelstromverlusten und Temperaturen ähnliche Funktionen hat, wobei auch die Energieeinsparung bei beiden Produkten gleich ist.

Abweichend zu einem aus Keramikmaterial bestehenden Spalttopf hat der aus Glas bestehende Spalttopf jedoch den großen Vorteil, dass er wesentlich preiswerter hergestellt werden kann, so dass die Magnetkupplung, respektive der Spalttopf, auch in Serienpumpen/-verdichtern/-lüftern eingesetzt werden kann.

Besondere Einsatzfälle für Pumpen, Verdichtern und Lüfter, die bis dato einen aus keramischen Material bestehenden Spalttopf bedingten, sind nun auch nicht mehr notwendig, da ein wesentlich preiswerteres aus Glas bestehendes Bauteil bereitgestellt wird.

Gegenüber bisher vielfach zum Einsatz gelangenden aus Metall bestehenden Spalttöpfen, kann durch den Einsatz des Erfindungsgegenstandes nunmehr auch an weiteren Bauteilen der Magnetkupplung gearbeitet werden. Hierbei können z. B. andersartige Magnete, respektive aus anderen Werkstoffen bestehende Magnete, eingesetzt werden, da weder hohe Temperaturen noch Wirbelstromverluste gegeben sind. Durch Auswahl preiswerterer Werkstoffe für die Magnete, ist ein weiterer Preisvorteil für die Magnetkupplung gegeben.

Wie bereits angesprochen, ist bei Einsatz eines metallischen Spalttopfes eine hohe Verlustleistung hinsichtlich der Wirbelströme vorhanden. Diese tritt bei den erfindungsgemäßen Spalttöpfen nicht mehr auf, so dass auch Antriebsmittel, wie Elektromotore, leistungsmäßig geringer ausgelegt werden können, was letztendlich zu einer weiteren Erhöhung der Wirtschaftlichkeit beiträgt.

Die erfindungsgemäße Magnetkupplung ist bevorzugt einsetzbar im Bereich von Verdrängerpumpen. Nur beispielsweise wird auf Rotationskolbenpumpen Exzenterschneckenpumpen, Impellerpumpen hingewiesen.

Darüber hinaus ist die erfindungsgemäße Magnetkupplung ebenfalls vorteilhaft einsetzbar im Bereich von Verdichtern, die man zum Komprimieren von Gas verwendet. Ebenfalls beispielhaft sei hier nur auf Hubkolbenverdichter, Rotationsverdichter, Schraubenverdichter hingewiesen.

Der Erfindungsgegenstand ist anhand eines Ausführungsbeispiels in der Zeichnung dargestellt und wird wie folgt beschrieben. Es zeigen:
- Figur 1: konstruktiver Aufbau einer Magnetkupplung einerseits in der Perspektive und andererseits in der Seitenansicht;
- Figur 2: Einzelteildarstellung des Spalttopfes gemäß Figur 1 einerseits in der Perspektive und andererseits in verschiedenen Einzeldarstellungen.

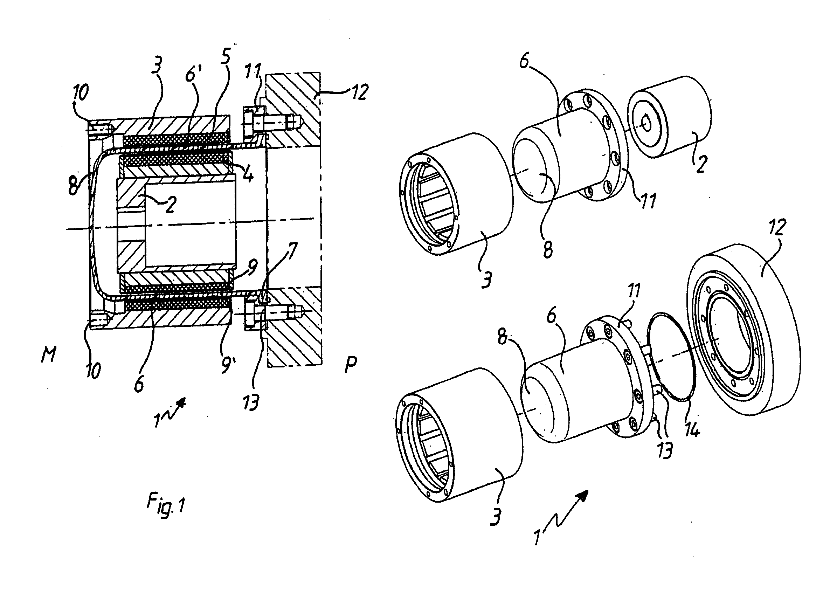

Figur 1 zeigt einerseits in perspektivischer Darstellung den Aufbau der erfindungsgemäßen Magnetkupplung 1 und andererseits einen teilweise angedeuteten Montagezustand der Magnetkupplung 1. Die Magnetkupplung 1 besteht aus folgenden wesentlichen Bauteilen:
einem Innenrotor 2, einem Außenrotor 3, die beide mit entsprechenden Magneten 4,5 bestückt sind sowie einem Spalttopf 6. Der Spalttopf 6 verfügt über einen Ansatz 7 sowie einen geschlossenen Boden 8. Der sich zwischen dem Boden 8 und dem Ansatz 7 erstreckende rohrförmige Abschnitt 6' ist hierbei im Luftspalt 9,9' zwischen den Magneten 4,5 mit minimalem Spiel (+/- 0,1 mm) positioniert. Der Spalttopf 6 besteht erfindungsgemäß aus Borosilikatglas, das besonders beständig gegen Chemikalien, sowie Druck- und Temperaturschwankungen ist und einen Wärmeausdehnungskoeffizienten < 4 x 10⁻⁶/K aufweist. In der Einbausituation ist die Motorseite M sowie die Pumpenseite P angedeutet. Motorseitig sind im Außenrotor Gewindebohrungen 10 eingebracht, an welche ein Elektromotor (nicht dargestellt) angeflanscht werden kann. Über ein flanschartig ausgebildetes Bauteil 11 kann die Magnetkupplung 1, beinhaltend den Innenrotor 2, den Außenrotor 3 sowie den Spalttopf 6 beispeilsweise mit einem Pumpenflansch 12 über Verbindungselemente 13 in Wirkverbindung gebracht werden. Zur Abdichtung kommt ein handelsüblicher O-Ring 14 zum Einsatz.

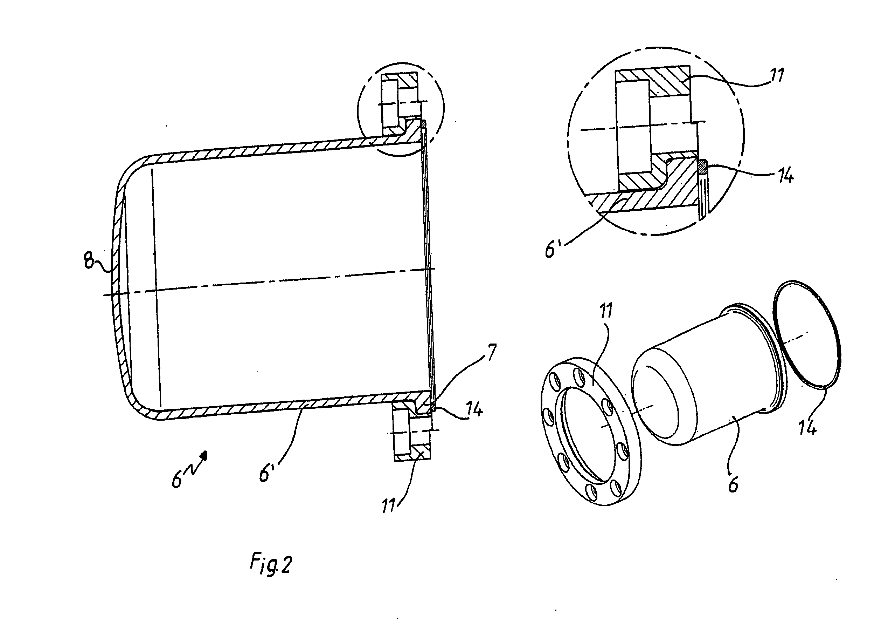

Figur 2 zeigt als Einzelteildarstellung den erfindungsgemäßen aus Borosilikatglas bestehenden Spalttopf 6, das flanschartig ausgebildete Bauteil 11 sowie den O-Ring 14. Erkennbar ist der geschlossene Boden 8 sowie der umlaufende Ansatz 7 und der sich zwischen dem Boden 8 und dem Ansatz 7 erstreckende rohrförmige Abschnitt 6'.

Der aus Borosilikatglas bestehende Spalttopf 6 kann beispielsweise dadurch hergestellt werden, dass ein Rohrabschnitt definierter Länge (Überlänge) zum Einsatz gelangt und durch Temperatur- und Druckeinwirkung das eine Rohrende zu einem geschlossenen Boden umgeformt, während gleichzeitig oder in einem weiteren Arbeitsschritt durch Druck- und Temperatureinwirkung der Ansatz 7 angeformt wird.

Durch Einsatz bereits hoch präziser Vorprodukte (Rohre) können geringste Toleranzen hinsichtlich des Luftspalts 9,9' eingehalten werden.

Alternativ besteht natürlich auch die Möglichkeit, den Spalttopf 6 unter Temperatur-und Druckeinwirkung durch Pressen eines Glasrohlings zu erzeugen, wobei hier jedoch Nachteile bei den Toleranzen hingenommen werden müssen.

### Bezugszeichenliste

- 1: Magnetkupplung
- 2: Innenrotor
- 3: Außenrotor
- 4: Magnet
- 5: Magnet
- 6: Spalttopf
- 6': rohrförmiger Abschnitt
- 7: Ansatz
- 8: Boden
- 9: Luftspalt
- 9': Luftspalt
- 10: Gewindebohrung
- 11: flanschartiges Bauteil
- 12: Pumpenflansch
- 13: Verbindungselement
- 14: O-Ring

## Patentansprüche

1. Magnetkupplung, zumindest beinhaltend einen Innenrotor (2), einen Außenrotor (3) und einen zwischen Innen- (2) und Außenrotor (3) angeordneten, aus Glas bestehenden Spalttopf (6), **dadurch gekennzeichnet, dass** der Spalttopf (6) aus einem Borosilikatglas besteht, das neben Siliziumdioxid als Hauptbestandteil Alkalimetalloxide in Gehalten 3 - 9 %, Aluminiumoxid in Gehalten 1,5 - 8 %, Erdalkalimetalloxide in Gehalten bis 6 % und Bortrioxid in Gehalten 6 - 14 % enthält.

2. Magnetkupplung nach Anspruch 1, **dadurch gekennzeichnet, dass** der Spalttopf (6) aus einem chemikalien-, druck- und temperaturbeständigen Glas besteht, das insbesondere einen Wärmeausdehnungskoeffizienten < 4 x 10⁻⁶/K aufweist.

3. Magnetkupplung nach Anspruch 1 oder 2, **dadurch gekennzeichnet, dass** der Grundkörper für den Spalttopf (6) durch ein Glasrohr gebildet ist, das zur Erzeugung des Spalttopfes (6) durch Temperatur- und Druckeinwirkung dergestalt umgeformt wird, dass im Bereich des einen Rohrendes ein geschlossener Boden (8) und im Bereich des anderen Rohrendes ein Ansatz (7) entsteht.

4. Magnetkupplung nach einem der Ansprüche 1 bis 3, **dadurch gekennzeichnet, dass** der Spalttopf (6) durch Pressen eines Glasrohlings entsteht.

5. Magnetkupplung nach einem der Ansprüche 1 bis 4, einsetzbar im Bereich einer Flüssigkeitspumpe, insbesondere einer Verdrängerpumpe.

6. Magnetkupplung nach einem der Ansprüche 1 bis 4, einsetzbar im Bereich eines Verdichters oder eines Lüfters.

7. Spalttopf für eine Magnetkupplung (1), bestehend aus Glas, **dadurch gekennzeichnet, dass** das Glas durch ein Borosilikatglas gebildet ist, dass neben Siliziumdioxid als Hauptbestandteil Alkalimetalloxide in Gehalten 3 - 9 %, Aluminiumoxid in Gehalten 1,5 - 8 %, Erdalkalimetalloxide in Gehalten bis 6 % und Bortrioxid in Gehalten 6 bis 14 % enthält.

8. Spalttopf nach Anspruch 7, **dadurch gekennzeichnet, dass** der Grundkörper für den Spalttopf (6) durch ein Glasrohr gebildet ist, das zur Erzeugung des Spalttopfes (6) durch Temperatur- und Druckeinwirkung dergestalt umgeformt wird, dass im Bereich des einen Rorendes ein geschlossener Boden (8) und im Bereich des anderen Rohrendes ein Ansatz (7) entsteht.

9. Spalttopf nach Anspruch 7 oder 8, erzeugt durch Pressen eines Glasrohlings.

## Claims

1. A magnetic coupling comprising at least one inner rotor (2), one outer rotor (3) and a separating can (6) made of glass which is placed between the inner rotor (2) and the outer rotor (3), **characterized in that** the separating can (6) is made of a borosilicate glass which contains, apart from silicon dioxide as main component, contents of alkali oxides of 3 to 9 %, contents of aluminum oxide of 1.5 to 8 %, contents of alkaline earth metal oxides of up to 6 % and contents of boron trioxide of 6 to 14 %.

2. A magnetic coupling according to claim 1, **characterized in that** the separating can (6) is made of a chemicals-, pressure- and temperature-resistant glass which in particular comprises a thermal expansion coefficient of < 4 x 10⁻⁶/K.

3. A magnetic coupling according to claim 1 or 2, **characterized in that** the base body of the separating can (6) is formed by a glass tube which, for producing the separating can (6), is transformed by applying heat and pressure such that a closed bottom (8) is formed in the area of the one tube end and a projection (7) is formed in the area of the other tube end.

4. A magnetic coupling according to one of the claims 1 through 3, **characterized in that** the separating can (6) is manufactured by moulding a glass blank.

5. A magnetic coupling according to one of the claims 1 through 4, usable in the field of a fluid pump, in particular a positive displacement pump.

6. A magnetic coupling according to one of the claims 1 through 4, usable in the field of a compressor or a ventilator.

7. A separating can for a magnetic coupling (1), made of glass, **characterized in that** the glass is a borosilicate glass which contains, apart from silicon dioxide as main component, contents of alkali oxides of 3 to 9 %, contents of aluminum oxide of 1.5 to 8 %, contents of alkaline earth metal oxides of up to 6 % and contents of boron trioxide of 6 to 14 %.

8. A separating can according to claim 7, **characterized in that** the base body of the separating can (6) is formed by a glass tube which, for producing the separating can (6), is transformed by applying heat and pressure such that a closed bottom (8) is formed in the area of the one tube end and a projection (7) is formed in the area of the other tube end.

9. A separating can according to claim 7 or 8, manufactured by moulding a glass blank.

## Revendications

1. Accouplement magnétique, comprenant au moins un rotor intérieur (2), un rotor extérieur (3) et un pot à entrefer (6) en verre qui est disposé entre le rotor intérieur (2) et le rotor extérieur (3), **caractérisé en ce que** le pot à entrefer (6) est fabriqué en verre de borosilicate qui contient, outre du dioxyde de silicium en tant que composant principal, des teneurs de 3 à 9 % en oxydes de métal alcalin, des teneurs de 1,5 à 8 % en oxyde d'aluminium, des teneurs de jusqu'à 6 % en oxydes de métal alcalino-terreux et des teneurs de 6 à 14 % en trioxyde de bore.

2. Accouplement magnétique selon la revendication 1, **caractérisé en ce que** le pot à entrefer (6) est fabriqué en un verre résistant aux substances chimiques, à la pression et au chaud, qui comprend notamment un coefficient de dilatation thermique de < 4 x 10⁻⁶/K.

3. Accouplement magnétique selon la revendication 1 ou la revendication 2, **caractérisé en ce que** le corps de base du pot à entrefer (6) est formé par un tube en verre qui, pour produire le pot à entrefer (6), est déformé sous l'action thermique et de pression de façon qu'un fond fermé (8) soit formé au niveau de l'une extrémité de tube et une saillie (7) soit formée au niveau de l'autre extrémité de tube.

4. Accouplement magnétique selon l'une des revendications 1 à 3, **caractérisé en ce que** le pot à entrefer (6) est fabriqué par moulage d'une embauche en verre.

5. Accouplement magnétique selon l'une des revendications 1 à 4, utilisable dans le domaine d'une pompe à liquide, notamment d'une pompe volumétrique.

6. Accouplement magnétique selon l'une des revendications 1 à 4, utilisable dans le domaine d'un compresseur ou d'un ventilateur.

7. Pot à entrefer destiné à un accouplement magnétique (1), composé de verre, **caractérisé en ce que** le verre est un verre de borosilicate qui contient, outre du dioxyde de silicium en tant que composant principal, des teneurs de 3 à 9 % en oxydes de métal alcalin, des teneurs de 1,5 à 8 % en oxyde d'aluminium, des teneurs de jusqu'à 6 % en oxydes de métal alcalino-terreux et des teneurs de 6 à 14 % en trioxyde de bore.

8. Pot à entrefer selon la revendication 7, **caractérisé en ce que** le corps de base du pot à entrefer (6) est formé par un tube en verre qui, pour produire le pot à entrefer (6), est déformé sous l'action thermique et de pression de façon qu'un fond fermé (8) soit formé au niveau de l'une extrémité de tube et un embout (7) soit formé au niveau de l'autre extrémité de tube.

9. Pot à entrefer selon la revendication 7 ou la revendication 8, fabriqué par moulage d'une embauche en verre.
